# EUROPEAN PATENT APPLICATION

(11) **EP 3 808 458 A1**
(43) Date of publication of application: **21.04.2021**
(21) Application number: 19820101.4
(22) Date of filing: 14.03.2019
(51) Int. Cl.: B06B 1/04, B60N 2/90

(54) **VIBRATION GENERATING DEVICE**

(30) Priority: 12.06.2018 JP 2018112029
(71) Applicant: Clarion Co., Ltd., Saitama-shi, Saitama 330-0081 (JP); Tachi-S Co., Ltd., Akishima-shi, Tokyo 196-8611 (JP)
(72) Inventor: UENO, Minoru, Saitama-shi, Saitama 330-0081 (JP); NAKASHIMA, Fumiaki, Saitama-shi, Saitama 330-0081 (JP); NOGUCHI, Kazuo, Akishima-shi, Tokyo 196-8611 (JP)
(74) Representative: Vigand, Philippe
(86) International application number: PCT/JP2019/010629
(87) International publication number: WO 2019/239662

(57) **Abstract**

To allow a vibration generating device to excellently generate vibration. There is provided a vibration generating device 10 including: a vibration transmitting member 11 that has a rod shape and transmits vibration; and an exciter 12 that is connected to the vibration transmitting member 11 and generates vibration transmitted to the vibration transmitting member 11, wherein a plurality of the vibration transmitting members 11 are provided for one exciter 12 and a first vibration transmitting member 31 and a second vibration transmitting member 32 are at least provided, and a total length of the second vibration transmitting member 32 is different from a total length of the first vibration transmitting member 31.

## Description

### Technical Field

The present invention relates to a vibration generating device.

### Background Art

There is, as a background technology, Japanese Patent Laid-Open No. 2017-19386 (hereinafter called Patent Literature 1). Patent Literature 1 discloses "A vibration generator 1 includes a vibration transmission member 10 and an exciter 20. The vibration transmission member 10 is disposed in a seat surface 2a of a seat 2 so as to extend in the horizontal direction of the seat surface 2a and is able to transmit a vibration in the extending direction. The exciter 20 is able to transmit a vibration to the vibration transmission member 10 in the extending direction of the vibration transmission member 10".

### Citation List

### Patent Literature

Patent Literature 1 Japanese Patent Laid-Open No. 2017-19386

### Summary of Invention

### Technical Problem

Now, while the aforementioned conventional vibration generating device vibrates one vibration transmitting member with the vibration generating member (exciter), it is difficult to excellently vibrate the vibration transmitting member over a wide range thereof since nodes and antinodes of vibration arise on the vibration transmitting member in its longitudinal direction.

The present invention is devised in view of the aforementioned circumstances, and an object of the present invention is to allow a vibration generating device to excellently generate vibration.

### Solution to Problem

This specification contains the entire contents of Japanese Patent Application No. 2018-112029 filed on June 12, 2018.

The present invention provides a vibration generating device including: a vibration transmitting member that has a rod shape and transmits vibration; and a vibration generating member that is connected to the vibration transmitting member and generates vibration transmitted to the vibration transmitting member, wherein a plurality of the vibration transmitting members are provided for one vibration generating member and a first vibration transmitting member and a second vibration transmitting member are at least provided, and a total length of the second vibration transmitting member is different from a total length of the first vibration transmitting member.

### Advantageous Effects of Invention

Since in the vibration generating device according to the present invention, the total length of the second vibration transmitting member is different from the total length of the first vibration transmitting member, the vibration state of the first vibration transmitting member and the vibration state of the second vibration transmitting member are different, and reduction in vibration due to a node of vibration of the first vibration transmitting member can be effectively supplemented with vibration of the second vibration transmitting member. Therefore, the vibration transmitting member can be excellently vibrated. Moreover, the first vibration transmitting member and the second vibration transmitting member can share one vibration generating member and the number of components can be reduced.

### Brief Description of Drawings

[Figure 1] Figure 1 is a sectional view of a seat in which a vibration generating device according to a first embodiment which the present invention is applied to is provided.
[Figure 2] Figure 2 is a perspective view of the vibration generating device.
[Figure 3] Figure 3 is a sectional view taken along the III-III line in Figure 1.
[Figure 4] Figure 4 is a diagram showing a vibration phenomenon in vibrating a rod.
[Figure 5] Figure 5 is a diagram showing a vibration phenomenon of a comparative example.
[Figure 6] Figure 6 is a diagram showing a vibration phenomenon of a vibration generating device provided for a seat surface part.
[Figure 7] Figure 7 is a diagram showing vibration of the seat surface part in which the vibration generating device is provided.
[Figure 8] Figure 8 is a perspective view of a vibration generating device of a second embodiment.

### Description of Embodiments

Hereafter, embodiments of the present invention are described with reference to the drawings.

### [First Embodiment]

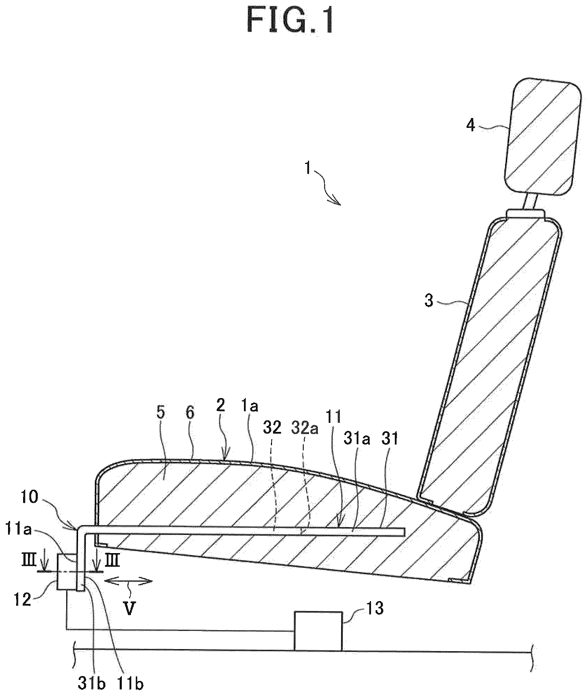

Figure 1 is a sectional view of a seat 1 in which a vibration generating device 10 according to a first embodiment which the present invention is applied to is provided.

The seat 1 includes a seat surface part 2 which a seated person is to be seated on, a back supporting part 3 extending upward from a rear end part of the seat surface part 2, and a headrest 4 attached to an upper end of the back supporting part 3. The seat 1 is exemplarily a seat provided in a vehicle such as an automobile.

The seat 1 includes a seat frame (not shown) as a framework inside. The seat 1 includes a cushion part 5 supported on the aforementioned seat frame, and a seat cover 6 covering the cushion part 5.

The vibration generating device 10 is provided in the seat surface part 2. The vibration generating device 10 is inserted from a front face of the seat surface part 2 in the front-rear direction and provided in the cushion part 5 of the seat surface part 2. A material of the cushion part 5 is exemplarily urethane. Notably, the vibration generating device 10 may be inserted into the cushion part 5 from a rear face of the seat surface part 2 in the front-rear direction.

The vibration generating device 10 includes a rod-shaped vibration transmitting member 11 and an exciter 12 connected to the vibration transmitting member 11 as a vibration generating member which vibrates the vibration transmitting member 11.

A sound source device 13 which drives the exciter 12 is connected to the vibration generating device 10.

The vibration generating device 10 transmits vibration of the exciter 12 driven by the sound source device 13 to the seat surface part 2 via the vibration transmitting member 11.

The vibration generating device 10 is an alarm device which alarms the seated person with vibration via the seat 1. Notably, the vibration generating device 10 may play back a voice sound with vibration generated from the seat 1.

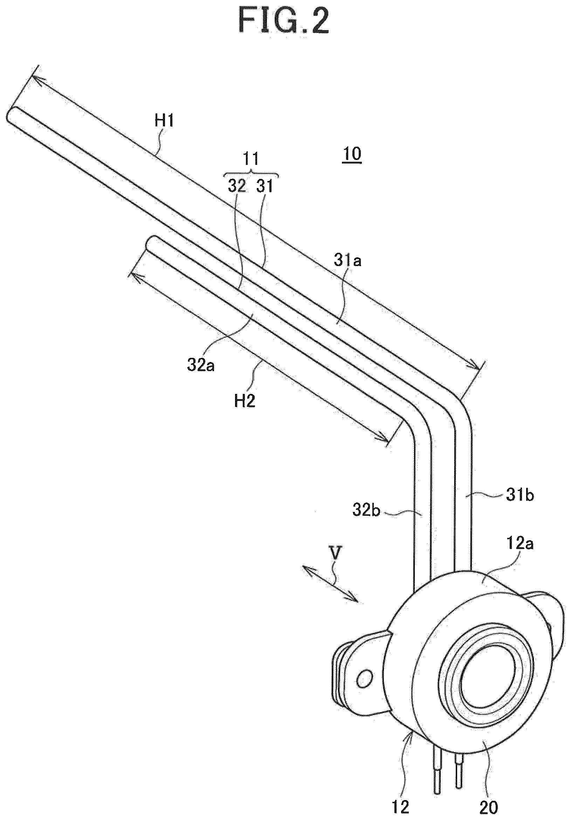

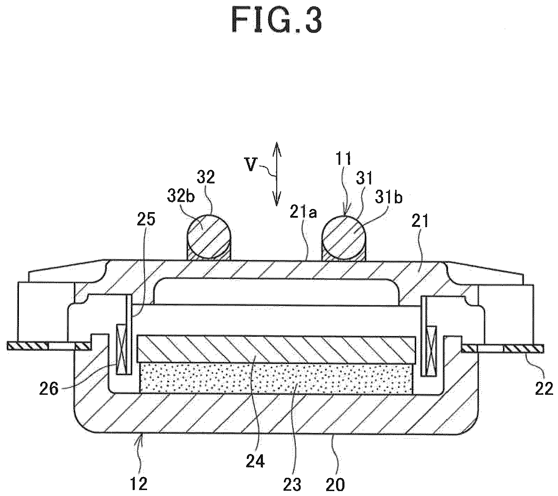

Figure 2 is a perspective view of the vibration generating device 10. Figure 3 is a sectional view taken along the III-III line in Figure 1.

The exciter 12 is an acoustic output device which vibrates an object which the exciter 12 is attached to with vibration generated by the exciter 12 to output vibration and/or sound.

Referring to Figure 2 and Figure 3, the exciter 12 includes a bottomed cylinder-shaped outer yoke 20, a disc-shaped frame part 21 provided so as to close an opening of the outer yoke 20, a damper part 22 resiliently connecting the outer yoke 20 and the frame part 21 together, a magnet 23 fixed to a bottom part of the outer yoke 20, an inner yoke 24 fixed onto the magnet 23, a cylindrical bobbin 25 fixed to the frame part 21, and a voice coil 26 provided on the outer periphery of the bobbin 25.

The bobbin 25 is arranged between the outer periphery of the inner yoke 24 and the inner periphery of the outer yoke 20, and the voice coil 26 is wound on the outer periphery of the bobbin 25.

When an acoustic signal is input to the exciter 12 from the sound source device 13, the bobbin 25 vibrates in response to a frequency of the acoustic signal. In detail, a current of the acoustic signal flows in the voice coil 26, thereby, Lorentz force oriented to the axial direction of the bobbin 25 is generated, and the exciter 12 vibrates.

The vibration direction V of the exciter 12 is the axial direction of the bobbin 25.

A plurality of the vibration transmitting members 11 are provided for one exciter 12. The vibration transmitting members 11 include a first vibration transmitting member 31 and a second vibration transmitting member 32.

The first vibration transmitting member 31 has a rod shape. The first vibration transmitting member 31 includes a rod-shaped main body part 31a linearly extending, and a rod-shaped bent part 31b bent at an end of the main body part 31a. The first vibration transmitting member 31 is an L-shaped rod material in which the bent part 31b is bent at a substantially right angle relative to the main body part 31a, and is formed by bending one round rod about the bent part 31b.

The second vibration transmitting member 32 has a rod shape. The second vibration transmitting member 32 includes a rod-shaped main body part 32a linearly extending, and a rod-shaped bent part 32b bent at an end of the main body part 32a. The second vibration transmitting member 32 is an L-shaped rod material in which the bent part 32b is bent at a substantially right angle relative to the main body part 32a, and is formed by bending one round rod around the bent part 32b.

Each of the bent part 31b and the bent part 32b of the first vibration transmitting member 31 and the second vibration transmitting member 32 is connected to the frame part 21 of the exciter 12. In detail, as to the bent part 31b and the bent part 32b, outer circumferential parts of end parts of them are fixed onto an outer surface 21a of the frame part 21 in the plate thickness direction, and they extend outward in the radial direction of the exciter 12 so as to be substantially parallel to the outer surface 21a.

The bent part 31b and the bent part 32b are arranged to be spaced from and substantially parallel to each other, and extend in an identical direction among the radial directions of the exciter 12. Namely, the bent part 31b and the bent part 32b extend in a direction perpendicular to the vibration direction V of the exciter 12.

As to the bent part 31b and the bent part 32b, the amounts of extension of them outward from an outer circumferential surface 12a of the exciter 12 are identical. The bent part 31b and the bent part 32b are fixed onto the outer surface 21a, for example, by welding.

The main body part 31a of the first vibration transmitting member 31 extends to be straight and parallel to the vibration direction V from an end of the bent part 31b.

The main body part 32a of the second vibration transmitting member 32 extends to be straight and parallel to the vibration direction V from an end of the bent part 32b. Here, the main body part 31a and the main body part 32a do not have to be perfectly parallel to the vibration direction V and may extend to be substantially parallel to the vibration direction V.

The main body part 31a and the main body part 32a are arranged to be spaced from and substantially parallel to each other, and extend in an identical direction among the vibration directions V.

As shown in Figure 1, the exciter 12 is arranged on an outer surface 11a of the L shape in lateral view within the bent part 31b and the bent part 32b. Namely, in lateral view, the main body part 31a and the main body part 32a extend on the opposite side to the exciter 12 side relative to the bent part 31b and the bent part 32b.

A total length H2 of the main body part 32a of the second vibration transmitting member 32 is smaller than a total length H1 of the main body part 31a of the first vibration transmitting member 31. Since the lengths of the bent part 31b and the bent part 32b are equal, the total length of the L shape of the second vibration transmitting member 32 is smaller than the total length of the L shape of the first vibration transmitting member 31.

Moreover, the main body part 31a and the main body part 32a are longer than the bent part 31b and the bent part 32b, respectively.

Materials of the first vibration transmitting member 31 and the second vibration transmitting member 32 are identical and diameters of the rods are identical. The materials of the first vibration transmitting member 31 and the second vibration transmitting member 32 are exemplarily metal such as an iron-based material.

As shown in Figure 1, the vibration transmitting members 11 are provided in the seat surface part 2 by the main body part 31a of the first vibration transmitting member 31 and the main body part 32a of the second vibration transmitting member 32 being buried in the cushion part 5 of the seat surface part 2.

The main body part 31a and the main body part 32a are substantially entirely inserted into the cushion part 5.

The bent part 31b and the bent part 32b extend downward from the respective ends of the main body part 31a and the main body part 32a to be exposed outside the seat surface part 2.

The upper surface of the seat surface part 2 is a contact surface 1a which the seated person is to be in contact with in the state of being seated. In the cushion part 5, the main body part 31a and the main body part 32a are arranged side by side in a virtual plane substantially parallel to the contact surface 1a. Namely, in the cushion part 5, the main body part 31a and the main body part 32a are arranged side by side with identical heights and substantially horizontal postures in the width direction (right-left direction) of the seat surface part 2.

The vibration generating device 10 can effectively vibrate the seat surface part 2 via the first vibration transmitting member 31 and the second vibration transmitting member 32 by setting and adjusting a frequency of vibration output from the exciter 12 to a frequency at which the first vibration transmitting member 31 and the second vibration transmitting member 32 resonate or a frequency at which the seat surface part 2 resonates.

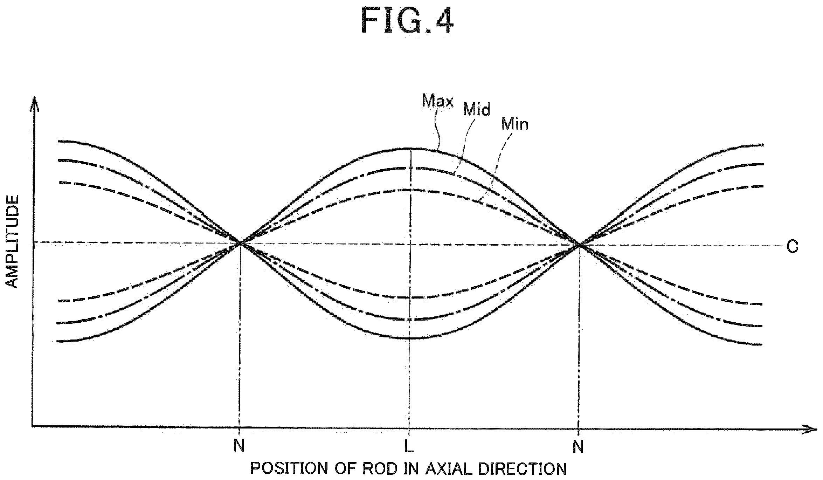

Figure 4 is a diagram showing a vibration phenomenon in vibrating a rod. Figure 4 shows the position of the rod in the axial direction on the axis of abscissas, and the amplitude of vibration relative to a vibration center C as a reference on the axis of ordinates.

In general, natural vibration of a rod supported at a fulcrum generates a stationary wave and nodes N and antinodes L of vibration arise in the axial direction (longitudinal direction) of the rod. The stationary wave is generated by waves of vibration being reflected at the aforementioned fulcrum.

On the rod, vibration is almost not generated at the position of a node N even when the exciter vibrates the rod. Vibration is almost not generated at the position of the node N even when the strength of vibration changes by the voltage of the exciter being changed.

On the rod, vibration is generated at the position of an antinode L when the exciter vibrates the rod. When the voltage of the exciter is being changed, the vibration of the rod is changing at the position of the node N in response to the magnitude of the voltage, and the vibration of the rod is larger as the voltage is larger. Figure 4 shows the case where the voltage is set to its maximum by sign Max, the case where the voltage is set to its median by sign Mid, and the case where the voltage is set to its minimum by sign Min.

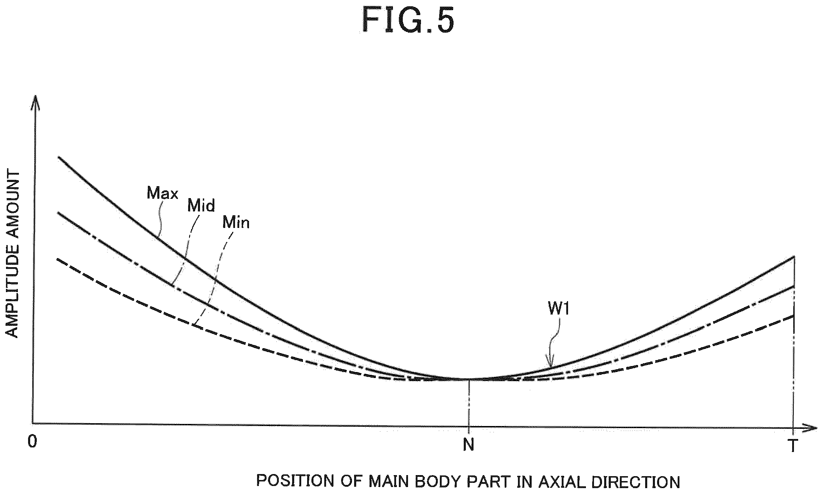

Figure 5 is a diagram showing a vibration phenomenon of a comparative example.

The comparative example is a vibration generating device in which only the first vibration transmitting member 31 is provided as the vibration transmitting member for the exciter 12.

As to the vibration device of the comparative example, the main body part 31a is substantially entirely buried into the cushion part 5.

Figure 5 shows the position of the main body part 31a in the axial direction on the axis of abscissas, and the amplitude amount of the main body part 31a on the axis of ordinates. The amplitude amount of the main body part 31a is presented by an amplitude amount W1.

On the axis of abscissas in Figure 5, the side of the proximal end (end on the exciter 12 side) of the main body part 31a is presented to be zero and the position of the distal end of the main body part 31a is presented by a distal end T1. On the axis of ordinates in Figure 5, the amplitude amount with which the direction of the amplitude does not matter is presented for convenience of measurement.

Moreover, Figure 5 shows voltages input to the exciter 12 by sign Max, sign Mid and sign Min similarly to Figure 4.

Even in the case of a structure in which the main body part 31a is substantially entirely supported by the cushion part 5 as in the comparative example, vibration by the exciter 12 being driven generates stationary waves as in Figure 5.

In the comparative example, the amplitude amount of the main body part 31a is large on the proximal end side and the distal end T1 side of the main body part 31a, and a node N1 at which the amplitude amount is very small arises at a middle part of the main body part 31a in the axial direction.

At the node N1, the amplitude amount has a certain small value regardless of the magnitude of the voltage of the exciter 12.

In the comparative example, it is difficult to effectively vibrate the seat surface part 2 at the position of the node N1 in the main body part 31a since the vibration is small there.

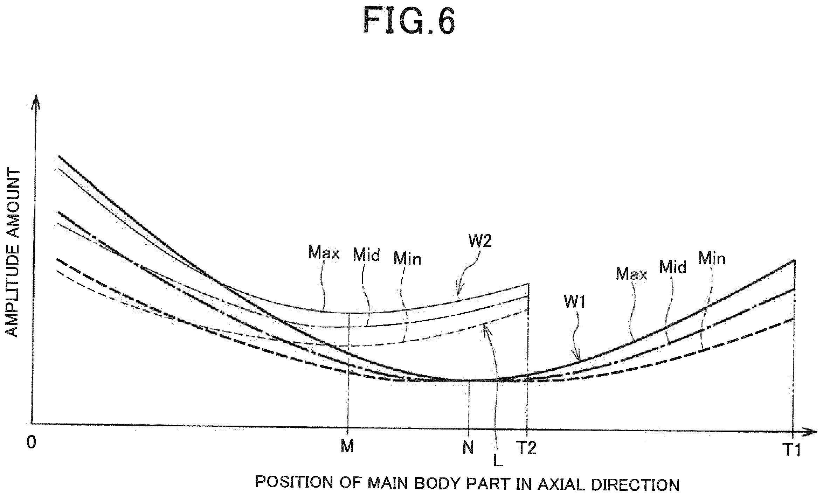

Figure 6 is a diagram showing a vibration phenomenon of the vibration generating device 10 provided in the seat surface part 2.

Figure 6 shows the positions of the main body parts 31a and 32a in the axial direction on the axis of abscissas, and the amplitude amounts of the main body parts 31a and 32a on the axis of ordinates. The amplitude amount of the main body part 31a is presented by the amplitude amount W1 as a thick line, and the amplitude amount of the main body part 32a is presented by an amplitude amount W2 as a thin line.

On the axis of abscissas in Figure 6, the side of the proximal ends (ends on the exciter 12 side) of the main body parts 31a and 32a is presented to be zero and the positions of the distal ends of the main body parts 31a and 32a are presented by distal ends T1 and T2, respectively. On the axis of ordinates in Figure 5, the amplitude amounts with which the direction of the amplitude does not matter are presented for convenience of measurement.

Moreover, Figure 6 shows voltages input to the exciter 12 by sign Max, sign Mid and sign Min similarly to Figure 4.

Referring to Figure 6, the amplitude amount W1 (Figure 6) of the main body part 31a of this first embodiment is identical to the amplitude amount W1 (Figure 5) of the comparative example.

Also within the main body part 32a of the second vibration transmitting member, vibration by the exciter 12 being driven generates stationary waves as in Figure 6.

Since the total length H2 of the main body part 32a is smaller than the total length H1 of the main body part 31a, a waveform of the amplitude amount W2 is different from a waveform of the amplitude amount W1.

As to the amplitude amount W2, the amplitude amount of the main body part 32a is large on the proximal end side and the distal end T2 side of the main body part 32a regardless of the magnitude of the voltage. Moreover, as to the amplitude amount W2, the amplitude amount is smallest at a middle part M of the main body part 32a in the axial direction regardless of the magnitude of the voltage.

An antinode L2 of vibration of the amplitude amount W2 arises in a portion on the distal end T2 side. The amplitude amount W2 is larger as going more to the distal end T2 side from the middle part M. Herein, the antinode L2 of vibration of the main body part 32a is a portion in which the amplitude amount W2 is changing in response to the change of the voltage, and arises in the section from the vicinity of the middle part M to the distal end T2.

The middle part M of the amplitude amount W2 is positioned more on the proximal end sides of the main body parts 31a and 32a than the node N1 of the amplitude amount W1 as to the positions of the main body parts 31a and 32a in the axial direction.

The antinode L2 of vibration of the amplitude amount W2 of the second vibration transmitting member 32 overlaps with the node N1 of the amplitude amount W1 of the first vibration transmitting member 31 as to the positions of the main body parts 31a and 32a in the axial direction.

Namely, in this first embodiment, the total length H2 of the main body part 32a is configured such that the antinode L2 of vibration of the main body part 32a of the second vibration transmitting member 32 is positioned at the position of the node N1 of vibration of the main body part 31a of the first vibration transmitting member 31.

Thereby, totally for the vibration transmitting member 11, vibration can be generated effectively over the total length of the vibration transmitting member 11 since the vibration of the node N1 of the first vibration transmitting member 31 the amplitude amount of which vibration is small is supplemented with the vibration of the antinode L2 of the second vibration transmitting member 32 the amplitude amount of which vibration is large. Therefore, vibration can be effectively transmitted to the seated person since the seat surface part 2 of the seat 1 can be vibrated substantially evenly over the total length of the vibration transmitting member 11.

As an example, when the total length H1 of the main body part 31a of the first vibration transmitting member 31 is 250 mm and the node N1 of the main body part 31a exists near at 150 mm, the total length H2 of the main body part 32a of the second vibration transmitting member 32 is configured to be a length with which the antinode L2 of the main body part 32a arises near at 150 mm. When the total length H2 of the main body part 32a in which the antinode L2 arises near at 150 mm is 150 mm, the total length H2 of the main body part 32a is configured to be 150 mm.

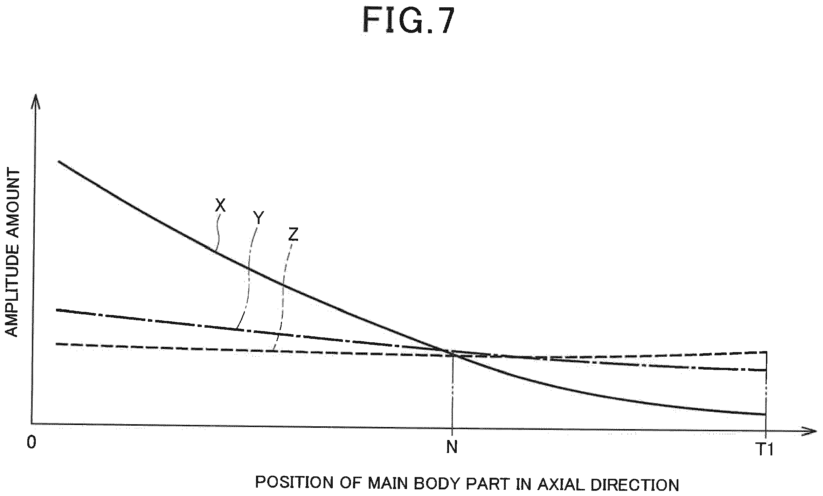

Figure 7 is a diagram showing vibration of the seat surface part 2 in which the vibration generating device 10 is provided.

Figure 7 shows the positions of the main body parts 31a and 32a in the axial direction on the axis of abscissas, and the vibration amount of a position on the upper surface of the seat surface part 2 on the axis of ordinates, the position corresponding to the positions of the main body parts 31a and 32a in the axial direction. Moreover, Figure 7 shows the vibration for each single frequency of the exciter 12. Such frequencies are presented as a frequency X, a frequency Y and a frequency Z in the order from a low frequency.

At the frequency X as the low frequency, the vibration amount of the seat surface part 2 is smaller as going more to the distal end side of the vibration transmitting member 11 from the proximal end side of the vibration transmitting member 11.

At the frequency Y and the frequency Z as higher frequencies than the frequency X, the vibration of the portion of the node N1 of the main body part 31a is effectively supplemented with the vibration of the antinode L2 of the main body part 32a, and the seat surface part 2 can be vibrated substantially evenly over the total length of the vibration transmitting member 11.

Moreover, a large vibration is obtained at the frequency X on the proximal end side of the vibration transmitting member 11, and a large vibration is obtained at the frequency Z on the distal end T1 side of the vibration transmitting member 11. Therefore, when the input signal to the exciter 12 is being changed from the frequency X to the frequency Z, vibration can be transmitted to the seated person as if to flow from the proximal end side to the distal end T1 side.

Even in the case of the structure in which the main body parts 31a and 32a are buried in the seat surface part 2, reduction in vibration due to the vibrations of the main body parts 31a and 32a mutually interfering is not observed. The cause can be considered as the arrangement of the main body parts 31a and 32a being spaced from each other and/or the material of the cushion part 5 not being sensitive to vibration.

As described above, according to the first embodiment which the present invention is applied to, the vibration generating device 10 includes: the rod-shaped vibration transmitting member 11; and the exciter 12 which is connected to the vibration transmitting member 11 and vibrates the vibration transmitting member 11, the plurality of vibration transmitting members 11 are provided for one exciter 12 and the first vibration transmitting member 31 and the second vibration transmitting member 32 are at least provided, and the total length of the second vibration transmitting member 32 is different from the total length of the first vibration transmitting member 31.

According to this configuration, since the total length of the second vibration transmitting member 32 is different from the total length of the first vibration transmitting member 31, the vibration state of the first vibration transmitting member 31 is different from the vibration state of the second vibration transmitting member 32, the reduction in vibration due to the node N1 of vibration of the first vibration transmitting member 31 can be supplemented effectively with the vibration of the second vibration transmitting member 32. Therefore, the vibration transmitting member 11 can be excellently vibrated. Moreover, the first vibration transmitting member 31 and the second vibration transmitting member 32 can share the one exciter 12, the number of components can be reduced, and production costs can be reduced while effectively supplementing the vibration of the exciter 12.

Moreover, the total length of the second vibration transmitting member 32 is configured so as to be smaller than the total length of the first vibration transmitting member 31 and configured such that the antinode L2 of vibration of the second vibration transmitting member 32 is positioned at the position of the node N1 of vibration of the first vibration transmitting member 31. According to this configuration, the reduction in vibration due to the node N1 of vibration of the first vibration transmitting member 31 can be supplemented effectively with the vibration of the antinode L2 of vibration of the second vibration transmitting member 32, and the vibration transmitting member 11 can be excellently vibrated.

Moreover, since the first vibration transmitting member 31 and the second vibration transmitting member 32 extend in a substantially parallel manner in the identical direction, the vibration of the first vibration transmitting member 31 can be supplemented efficiently with the vibration of the second vibration transmitting member 32, and the first vibration transmitting member 31 and the second vibration transmitting member 32 can be provided to be compact.

Furthermore, each of the first vibration transmitting member 31 and the second vibration transmitting member 32 includes the rod-shaped main body part 31a, 32a and the bent part 31b, 32b bent at the end of the main body part 31a, 32a, and the exciter 12 is fixed to the bent parts 31b and 32b of the first vibration transmitting member 31 and the second vibration transmitting member 32. According to this configuration, the exciter 12 can be arranged to be displaced relative to the first vibration transmitting member 31 and the second vibration transmitting member 32 by the exciter 12 being fixed to the bent parts 31b and 32b, and flexibility of arrangement of the vibration generating device 10 relative to the seat 1 which the vibration generating device 10 is to be attached to can be improved.

Moreover, the total length of the main body part 32a of the second vibration transmitting member 32 is configured such that the antinode L2 of vibration of the main body part 32a of the second vibration transmitting member 32 is positioned at the position of the node N1 of vibration of the main body part 31a of the first vibration transmitting member 31. According to this configuration, the reduction in vibration due to the node N1 of vibration of the main body part 31a of the first vibration transmitting member 31 can be supplemented effectively with the vibration of the antinode L2 of vibration of the main body part 32a of the second vibration transmitting member 32, and the vibration transmitting member 11 can be excellently vibrated.

Moreover, the vibration transmitting member 11 is arranged inside the seat 1 relative to the contact surface 1a of the seat 1, the seated person being to be in contact with the contact surface 1a. According to this configuration, the contact surface 1a of the seat 1 can be vibrated by the vibration generating device 10 to transmit the vibration to the seated person.

Moreover, the first vibration transmitting member 31 and the second vibration transmitting member 32 are arranged side by side in a virtual plane substantially parallel to the contact surface 1a of the seat 1. According to this configuration, vibration can be transmitted effectively to the contact surface 1a of the seat 1, and the first vibration transmitting member 31 and the second vibration transmitting member 32 can be arranged to be compact in the thickness direction of the seat 1.

Notably, the aforementioned first embodiment represents an aspect which the present invention is applied to, and the present invention is not limited to the aforementioned first embodiment.

While for the aforementioned first embodiment, the vibration transmitting member 11 has been described, supposing that the first vibration transmitting member 31 and the second vibration transmitting member 32 are provided, the present invention is not limited to this. A plurality of vibration transmitting members may be provided, the number of those being at least two or more, for example, a third vibration transmitting member different in total length from the first vibration transmitting member 31 may be further connected to the exciter 12.

Moreover, while for the aforementioned first embodiment, the first vibration transmitting member 31 and the second vibration transmitting member 32 have been described, supposing that they have L-shapes, the present invention is not limited to this. For example, the main body parts 31a and 32a may extend from the frame part 21 of the exciter 12 to be straight in the vibration direction V by fixing the ends of the main body parts 31a and 32a onto the frame part 21 without providing the bent parts 31b and 32b.

Moreover, while for the aforementioned first embodiment, the exciter 12 has been described, supposing that it is arranged on the outer surface 11a of the L shape in lateral view within the bent part 31b and the bent part 32b, the present invention is not limited to this. For example, the exciter 12 may be arranged on the inner surface 11b (see Figure 1) of the L shape in lateral view within the bent part 31b and the bent part 32b. In this case, in lateral view, the main body part 31a and the main body part 32a extend on the identical side to the exciter 12 side relative to the bent part 31b and the bent part 32b.

Moreover, a plurality of vibration generating devices 10 may be provided for the seat surface part 2. Furthermore, the vibration generating device(s) 10 may be provided for the back supporting part 3 and/or the headrest 4, not limitedly for the seat surface part 2.

### [Second Embodiment]

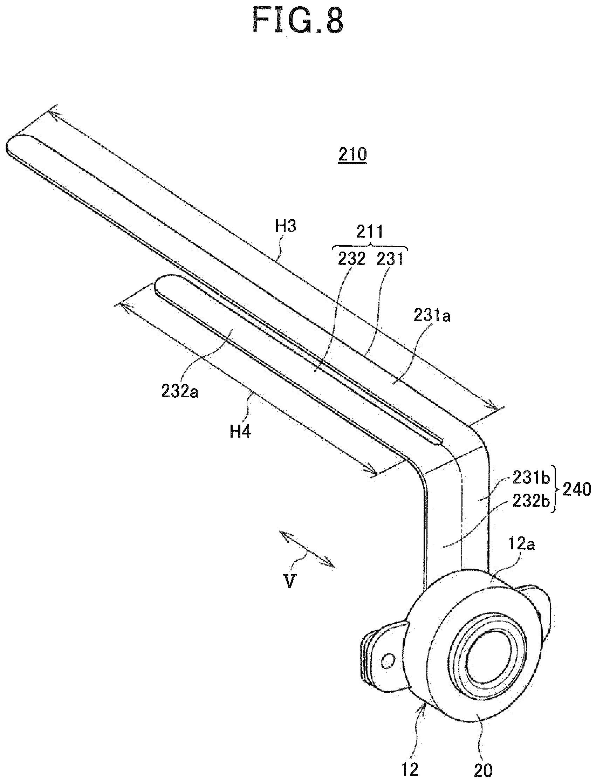

Hereafter, a second embodiment which the present invention is applied to is described with reference to Figure 8. In this second embodiment, the portions configured to be similar to those in the aforementioned first embodiment are given the same signs and their description is omitted.

In the second embodiment, the shape of a vibration transmitting member 211 is different from that of the vibration transmitting member 11 of the aforementioned first embodiment.

Figure 8 is a perspective view of a vibration generating device 210 of the second embodiment.

The vibration generating device 210 includes the vibration transmitting member 211 having a rod shape and the exciter 12.

A plurality of the vibration transmitting members 211 are provided for one exciter 12. The vibration transmitting members 211 include a first vibration transmitting member 231 and a second vibration transmitting member 232.

The first vibration transmitting member 231 is a rod having a flat plate shape. The first vibration transmitting member 231 includes a flat plate-shaped main body part 231a linearly extending, and a flat plate-shaped bent part 231b bent at an end of the main body part 231a. The first vibration transmitting member 231 is an L-shaped rod material in which the bent part 231b is bent at a substantially right angle relative to the main body part 231a, and is formed by bending a plate material about the bent part 231b.

The second vibration transmitting member 232 is a rod having a flat plate shape. The second vibration transmitting member 232 includes a flat plate-shaped main body part 232a linearly extending, and a flat plate-shaped bent part 232b bent at an end of the main body part 232a. The second vibration transmitting member 232 is an L-shaped rod material in which the bent part 232b is bent at a substantially right angle relative to the main body part 232a, and is formed by bending the plate material about the bent part 232b.

The bent part 231b and the bent part 232b are integrally provided as one plate material and form an integrated bent part 240. The main body part 231a and the main body part 232a branch and extend from the bent part 240.

Namely, in the vibration transmitting members 211, the main body part 231a, the main body part 232a and the bent part 240 are configured integrally with one plate material. The vibration transmitting members 211 can be easily integrally provided, for example, by shaping such a plate material through punching processing with a die and bending processing thereon.

Each of the bent part 231b and the bent part 232b of the first vibration transmitting member 231 and the second vibration transmitting member 232 are connected to the frame part 21 (Figure 3) of the exciter 12.

The bent part 240 extends from the frame part 21 in a direction perpendicular to the vibration direction V of the exciter 12.

The main body part 231a and the main body part 232a extend to be straight and parallel to the vibration direction V from an end of the bent part 240.

The main body part 231a and the main body part 232a are arranged to be spaced from and substantially parallel to each other, and extend in an identical direction among the vibration directions V.

A total length H4 of the main body part 232a of the second vibration transmitting member 232 is smaller than a total length H3 of the main body part 231a of the first vibration transmitting member 231. Since the lengths of the bent part 231b and the bent part 232b are equal, the total length of the L shape of the second vibration transmitting member 232 is smaller than the total length of the L shape of the first vibration transmitting member 231.

According to the second embodiment, the bent part 231b of the first vibration transmitting member 231 and the bent part 232b of the second vibration transmitting member 232 are integrally provided, and the main body part 231a of the first vibration transmitting member 231 and the main body part 232a of the second vibration transmitting member 232 branch and extend from the integrated bent part 240.

According to this configuration, the bent part 231b of the first vibration transmitting member 231 and the bent part 231b of the second vibration transmitting member can be easily manufactured, and the bent part 231b and the bent part 232b can be easily connected to the exciter 12 with high accuracy.

### Reference Signs List

1 Seat
1a Contact surface
10, 210 Vibration generating device
11, 211 Vibration transmitting member
12 Exciter (vibration generating member)
31, 231 First vibration transmitting member
31a, 32a, 231a, 232a Main body part
31b, 32b, 231b, 232b Bent part
32, 232 Second vibration transmitting member
H2, H4 Total length (total length of the main body part of the second vibration transmitting member)
L2 Antinode
N1 Node

## Claims

1. A vibration generating device **characterized by** comprising:
a vibration transmitting member that has a rod shape and configured to transmit vibration; and
a vibration generating member that is connected to the vibration transmitting member and configured to generate vibration transmitted to the vibration transmitting member, wherein
a plurality of the vibration transmitting members are provided for one vibration generating member and a first vibration transmitting member and a second vibration transmitting member are at least provided, and
a total length of the second vibration transmitting member is different from a total length of the first vibration transmitting member.

2. The vibration generating device according to Claim 1, wherein the total length of the second vibration transmitting member is configured so as to be smaller than the total length of the first vibration transmitting member and configured such that an antinode of vibration of the second vibration transmitting member is positioned at a position of a node of vibration of the first vibration transmitting member.

3. The vibration generating device according to Claim 1 or 2, wherein the first vibration transmitting member and the second vibration transmitting member extend in a substantially parallel manner in an identical direction.

4. The vibration generating device according to any of Claims 1 to 3, wherein
each of the first vibration transmitting member and the second vibration transmitting member includes a rod-shaped main body part and a bent part bent at an end of the main body part, and
the vibration generating member is fixed to the bent parts of the first vibration transmitting member and the second vibration transmitting member.

5. The vibration generating device according to Claim 4, wherein the total length of the main body part of the second vibration transmitting member is configured such that an antinode of vibration of the main body part of the second vibration transmitting member is positioned at a position of a node of vibration of the main body part of the first vibration transmitting member.

6. The vibration generating device according to Claim 4 or 5, wherein the bent part of the first vibration transmitting member and the bent part of the second vibration transmitting member are integrally provided, and the main body part of the first vibration transmitting member and the main body part of the second vibration transmitting member branch and extend from the integrated bent parts.

7. The vibration generating device according to any of Claims 1 to 6, wherein the vibration transmitting member is arranged inside a seat relative to a contact surface of the seat, a seated person being to be in contact with the contact surface.

8. The vibration generating device according to Claim 7, wherein the first vibration transmitting member and the second vibration transmitting member are arranged side by side in a virtual plane substantially parallel to the contact surface.
